# EUROPEAN PATENT APPLICATION

(11) **EP 4 528 523 A1**
(43) Date of publication of application: **26.03.2025**
(21) Application number: 23830030.5
(22) Date of filing: 19.06.2023
(51) Int. Cl.: G06F 15/163

(54) **DATA PROCESSING SYSTEM, METHOD AND APPARATUS, AND CONTROLLER**

(30) Priority: 27.06.2022 CN 202210733448; 14.10.2022 CN 202211260921
(71) Applicant: Huawei Technologies Co., Ltd., Shenzhen, Guangdong 518129 (CN)
(72) Inventor: ZHOU, Yigang, Shenzhen, Guangdong 518129 (CN)
(74) Representative: Gill Jennings & Every LLP
(86) International application number: PCT/CN2023/101171
(87) International publication number: WO 2024/001850

(57) **Abstract**

A data processing system and method, an apparatus, and a controller are provided, and relate to the field of data processing. The data processing system includes a plurality of nodes and a controller that are connected by using an interconnection device, and the plurality of nodes include a first node and a second node. When the second node requests to access the data processing system, the controller allocates a second node identifier to the second node, and the interconnection device forwards, based on the second node identifier, a message indicating that the first node accesses the second node. The second node identifier uniquely indicates the second node. The second node obtains to-be-processed data based on a source address indicated by the first node, and stores processed data of the to-be-processed data based on a destination address indicated by the first node. In this way, a scale of the data processing system is elastically expanded on demand, and a data processing request of a node is extended to different nodes in the system, so that an accelerator resource in the system can be shared by a plurality of nodes, to adapt to computing requirements in different application scenarios.

## Description

This application claims priorities to Chinese Patent Application No. 202210733448.9 filed with the China National Intellectual Property Administration on June 27, 2022 and entitled "MEMORY DATA ACCESS METHOD AND COMPUTING SYSTEM", and to Chinese Patent Application No. 202211260921.2, filed with the China National Intellectual Property Administration on October 14, 2022 and entitled "DATA PROCESSING SYSTEM AND METHOD, APPARATUS, AND CONTROLLER", both of which are incorporated herein by reference in their entireties.

### TECHNICAL FIELD

This application relates to the field of data processing, and in particular, to a data processing system and method, an apparatus, and a controller.

### BACKGROUND

Currently, with a high-bandwidth and low-latency inter-chip interconnect bus and switch, a plurality of nodes are interconnected into a high-performance cluster, which is commonly referred to as a super node (Super Node). The super node can provide a higher computing capability than a heterogeneous computing server architecture (for example, a central processing unit (central processing unit, CPU)+a domain-specific structure (Domain-Specific Architecture, DSA)), and the super node can provide a bandwidth greater than an Ethernet interconnection bandwidth. However, the super node is usually configured in a static mode, and cannot be flexibly expanded to adapt to computing requirements in different application scenarios.

### SUMMARY

This application provides a data processing system and method, an apparatus, and a controller, to flexibly expand a scale of a super node, and adapt to computing requirements in different application scenarios.

According to a first aspect, a data processing system is provided. The data processing system includes a plurality of nodes and a controller, the plurality of nodes include a first node and a second node, and the plurality of nodes and the controller are connected by using a high-speed interconnect link. The controller is configured to allocate a second node identifier to the second node when the second node requests to access the data processing system. A global physical address of the second node in the data processing system is a node identifier of the second node and a physical address of the second node. The controller is further configured to send the global physical address of the second node to the first node.

Different from configuration performed in a static mode in a startup phase of a data processing system, in this application, access of a new node is controlled by using the controller, so that a scale of the data processing system can be elastically expanded on demand, for example, access of an accelerator is supported, and a storage space of a global memory is increased, to meet computing requirements in different application scenarios.

With reference to the first aspect, in a possible implementation, the data processing system further includes an interconnection device, and the interconnection device is connected to the plurality of nodes based on the high-speed interconnect link. The controller is further configured to send a correspondence between the second node identifier and a port to the interconnection device. The port corresponding to the second node identifier is configured to forward a message to the second node.

The interconnection device may also be referred to as an interconnection chip or a switching chip. The interconnection device is configured to forward, based on the correspondence between the second node identifier and the port, a message indicating that the first node accesses the second node. For example, the interconnection device stores a correspondence between a first node identifier and a first port, and the interconnection device forwards, based on the correspondence between the first node identifier and the first port, a message indicating that the second node accesses the first node. The interconnection device stores a correspondence between the second node identifier and a second port, and the interconnection device forwards, based on the correspondence between the second node identifier and the second port, a message indicating that the first node accesses the second node.

In this way, the interconnection device forwards, based on a node identifier, data indicating communication between nodes, so that an accelerator resource in the system can be shared by a plurality of nodes, to adapt to computing requirements in different application scenarios.

It should be noted that the global physical address is an address that can be accessed by any one of the plurality of nodes included in the data processing system. Any one of the plurality of nodes included in the data processing system stores a global physical address of another node, so that the any node accesses a storage space of the another node based on the global physical address of the another node. The global physical address uniquely indicates a storage space of a node in the data processing system. It may be understood that the global physical address includes a node identifier and a physical address of the node. Because the node identifier uniquely indicates the node in the data processing system, the physical address in the global physical address uniquely indicates the storage space of the node in the data processing system. The physical address of the node is an address of the storage space in the node. Physical addresses of storage spaces in different nodes may be the same, but any node in the data processing system distinguishes between the storage spaces in the different nodes based on node identifiers in global physical addresses.

For example, a global physical address of the first node includes the first node identifier and a physical address of the first node. Because the first node identifier uniquely indicates the first node, and the physical address of the first node uniquely indicates a storage space of the first node, the global physical address of the first node may indicate the storage space of the first node.

The global physical address of the second node includes the second node identifier and the physical address of the second node. Because the second node identifier uniquely indicates the second node, and the physical address of the second node uniquely indicates a storage space of the second node, the global physical address of the second node may indicate the storage space of the second node.

Therefore, the first node may access the storage space of the second node based on the global physical address of the second node. The second node may access the storage space of the first node based on the global physical address of the first node.

With reference to the first aspect, in another possible implementation, the second node is configured to obtain to-be-processed data based on a source address indicated by the first node. The source address indicates a node identifier and a physical address of a node that stores the to-be-processed data. The second node is further configured to: process the to-be-processed data, and store processed data based on a destination address indicated by the first node. The destination address indicates a node identifier and a physical address of a node that stores the processed data.

In this way, a data processing request of a node is extended to different nodes in the system, and to-be-processed data is obtained or processed data is stored based on a physical address of a node uniquely indicated by a node identifier in a global physical address, so that an accelerator resource in the system can be shared by a plurality of nodes, to adapt to computing requirements in different application scenarios.

For example, the source address indicates the global physical address of the first node. The destination address indicates the global physical address of the second node.

With reference to the first aspect, in another possible implementation, the second node is specifically configured to perform an acceleration operation on the to-be-processed data based on an operation identifier indicated by the first node, to obtain the processed data. The second node includes any one of a processor, an accelerator, and a memory controller. For example, a job of a general-purpose processor (such as a CPU) is offloaded to the accelerator, so that the accelerator processes the job (such as an HPC, big data, or database job) that has a high computing requirement, to resolve a problem that the general-purpose processor does not have sufficient floating-point computing power and therefore cannot meet a heavy floating-point computing requirement in HPC, AI, or other scenarios, thereby shortening data processing, reducing system energy consumption, and improving system performance. Alternatively, the node may have an accelerator integrated inside. The independently deployed accelerator and the node integrated with the accelerator support flexible plug and removal, so that a scale of the data processing system can be elastically expanded on demand, to meet the computing requirements in different application scenarios.

With reference to the first aspect, in another possible implementation, storage media of the plurality of nodes form a global memory pool through unified addressing. For example, the global memory pool includes a storage space indicated by a source address and/or a storage space indicated by a destination address. In this way, in a data processing process, a node reads data from the global memory pool or writes data into the global memory pool, to increase a data processing speed.

With reference to the first aspect, in another possible implementation, the first node is further configured to access the storage space of the first node based on the physical address of the first node. The second node is further configured to access the storage space of the first node based on the physical address of the second node.

With reference to the first aspect, in another possible implementation, the controller is further configured to: when the second node exits the data processing system, control the first node to age the global physical address of the second node, and control the interconnection device to age the correspondence between the second node identifier and the port.

In this way, a controller and an interconnection device are disposed in the data processing system, and a node can be elastically added or removed based on a node access mechanism and exit mechanism, thereby implementing a super-node architecture that can be elastically expanded. This resolves a problem that a conventional super-node architecture cannot be dynamically expanded, avoids a problem that a conventional I/O bus architecture has a limited scale and a low bandwidth, and supports a dynamic fault tolerance mechanism when a node or an interconnection device is faulty.

According to a second aspect, a data processing method is provided. A data processing system includes a plurality of nodes, the plurality of nodes include a first node and a second node, and the plurality of nodes and a controller are connected by using a high-speed interconnect link. The method includes: When the second node requests to access the data processing system, the controller allocates a second node identifier to the second node. A global physical address of the second node in the data processing system is a node identifier of the second node and a physical address of the second node. The controller sends the global physical address of the second node to the first node.

With reference to the second aspect, in a possible implementation, the data processing system further includes an interconnection device, and the interconnection device is connected to the plurality of nodes based on the high-speed interconnect link. The method further includes: The controller sends a correspondence between the second node identifier and a port to the interconnection device. The port corresponding to the second node identifier is configured to forward a message to the second node.

The interconnection device forwards, based on the correspondence between the second node identifier and the port, a message indicating that the first node accesses the second node. The second node identifier uniquely indicates the second node.

With reference to the second aspect, in another possible implementation, the method further includes: When the second node exits the data processing system, the controller controls the first node to age the global physical address of the second node, and controls the interconnection device to age the correspondence between the second node identifier and the port.

With reference to the second aspect, in another possible implementation, the method further includes: The second node obtains to-be-processed data based on a source address indicated by the first node, then processes the to-be-processed data, and stores processed data based on a destination address indicated by the first node. The destination address indicates a node identifier and a physical address of a node that stores the processed data. The source address indicates a node identifier and a physical address of a node that stores the to-be-processed data.

According to a third aspect, a control apparatus is provided. The apparatus includes modules configured to perform the method performed by the controller in any one of the second aspect or the possible designs of the second aspect.

According to a fourth aspect, a data transmission apparatus is provided. The apparatus includes modules configured to perform the method performed by the interconnection device in any one of the second aspect or the possible designs of the second aspect.

According to a fifth aspect, a data processing node is provided. The node includes modules configured to perform the method performed by the node in any one of the second aspect or the possible designs of the second aspect.

According to a sixth aspect, a controller is provided. The control includes at least one processor and a storage. The storage is configured to store a set of computer instructions. When the processor is used as the controller in any one of the second aspect or the possible implementations of the second aspect to execute the set of computer instructions, operation steps of the data processing method in any one of the second aspect or the possible implementations of the second aspect are performed.

According to a seventh aspect, a chip is provided, including a processor and a power supply circuit. The power supply circuit is configured to supply power to the processor. The processor is configured to perform operation steps of the data processing method in any one of the second aspect or the possible implementations of the second aspect.

According to an eighth aspect, a computer-readable storage medium is provided, including computer software instructions. When the computer software instructions are run in a computing device, the computing device is enabled to perform operation steps of the method in any one of the second aspect or the possible implementations of the second aspect.

According to a ninth aspect, a computer program product is provided. When the computer program product runs on a computer, a computing device is enabled to perform operation steps of the method in any one of the second aspect or the possible implementations of the second aspect.

In this application, the implementations provided in the foregoing aspects may be further combined to provide more implementations.

### BRIEF DESCRIPTION OF DRAWINGS

FIG. 1 is a diagram of an architecture of a data processing system according to this application;
FIG. 2 is a diagram of a deployment scenario of a global memory pool according to this application;
FIG. 3 is a schematic flowchart of a method for accessing a data processing system by a node according to this application;
FIG. 4 is a schematic flowchart of a data processing method according to this application;
FIG. 5 is a diagram of a structure of a descriptor according to this application;
FIG. 6 is a schematic flowchart of a method for exiting a data processing system by a node according to this application;
FIG. 7 is a diagram of a structure of a control apparatus according to this application;
FIG. 8 is a diagram of a structure of a data processing node according to this application; and
FIG. 9 is a diagram of a structure of a computing device according to this application.

### DESCRIPTION OF EMBODIMENTS

For ease of description, terms in this application are first briefly described.

A super node (Super Node) is a high-performance cluster into which a plurality of nodes are interconnected by using a high-bandwidth and low-latency inter-chip interconnect bus and switch. A scale of the super node is greater than a scale of a node in a cache-coherent non-uniform memory access (Cache-Coherent Non-Uniform Memory Access, CC-NUMA) architecture, and an interconnection bandwidth of a node in the super node is greater than an Ethernet interconnection bandwidth.

A high-performance computing (High-Performance Computing, HPC) cluster is a computer cluster system. The HPC cluster includes a plurality of computers connected by using various interconnection technologies. The interconnection technology may be, for example, InfiniBand, remote direct memory access over converged Ethernet (Remote Direct Memory Access over Converged Ethernet, RoCE), or a transmission control protocol (Transmission Control Protocol, TCP). The HPC provides an ultra-high floating-point computing capability, and may be configured to meet computing requirements of computing-intensive, massive data processing, and other services. A comprehensive computing capability of the plurality of connected computers may be used to resolve large-scale computing problems. For example, the HPC cluster is configured to resolve large-scale computing problems and computing requirements related to scientific research, weather forecast, finance, simulation experiments, biopharmacy, gene sequencing, image processing, and other industries. When the HPC cluster is configured to resolve large-scale computing problems, computing time of data processing can be effectively shortened, and computing precision can be effectively improved.

A memory operation instruction may be referred to as a memory semantic or memory operation function. The memory operation instruction includes at least one of memory allocate (malloc), memory set (memset), memory copy (memcpy), memory move (memmove), memory release (memory release), and memory compare (memcmp).

Memory allocate is used to allocate a segment of memory to support running of an application.

Memory set is used to set a data mode, for example, initialized, of a global memory pool.

Memory copy is used to copy, to a storage space indicated by a destination address (destination), data stored in a storage space indicated by a source address (source).

Memory move is used to copy, to a storage space indicated by a destination address (destination), data stored in a storage space indicated by a source address (source), and delete the data stored in the storage space indicated by the source address (source).

Memory compare is used to perform comparison to determine whether data stored in two storage spaces is equal.

Memory release is used to release data stored in a memory to improve utilization of a system memory resource, thereby improving system performance.

Broadcast (broadcast) communication is a transmission manner in which a destination address indicates a device in a broadcast domain of a computer network when a data packet is transmitted on the computer network. The data packet sent in the broadcast communication manner may be referred to as a broadcast message.

To resolve a problem that a scale of a super node cannot be flexibly expanded and fails to adapt to computing requirements in different application scenarios, this application provides a data processing system, including a plurality of nodes and a controller that are connected by using an interconnection device. The plurality of nodes include a first node and a second node. When the second node requests to access the data processing system, the controller allocates a second node identifier to the second node, and the interconnection device forwards, based on the second node identifier, a message indicating that the first node accesses the second node. The second node identifier uniquely indicates the second node. The second node obtains to-be-processed data based on a source address indicated by the first node, and stores processed data of the to-be-processed data based on a destination address indicated by the first node. In this way, a scale of the data processing system is elastically expanded on demand, and a data processing request of a node is extended to different nodes in the system, so that an accelerator resource in the system can be shared by a plurality of nodes, to adapt to computing requirements in different application scenarios.

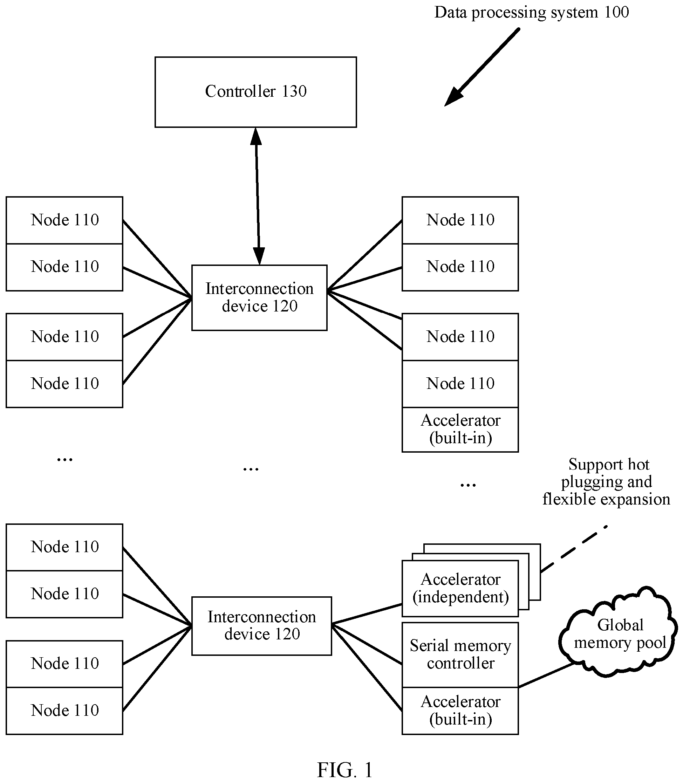

FIG. 1 is a diagram of an architecture of a data processing system according to this application. As shown in FIG. 1, the data processing system 100 is an entity that provides high-performance computing. The data processing system 100 includes a plurality of nodes 110.

The node 110 may be a processor, a server, a desktop computer, a controller of a storage array, a storage, or the like. The processor may be an XPU for data processing, such as a central processing unit (central processing unit, CPU), a graphics processing unit (graphics processing unit, GPU), a data processing unit (data processing unit, DPU), a neural processing unit (neural processing unit, NPU), or an embedded neural-network processing unit (neural-network processing unit, NPU). For example, the node 110 may include a computing node and a storage node.

When the node 110 is an XPU for data processing such as a GPU, a DPU, or an NPU with a high computing capability (Computing Power), the node 110 may be used as an accelerator, and a job of a general-purpose processor (such as a CPU) is offloaded to the accelerator, so that the accelerator processes the job (such as an HPC, big data, or database job) that has a high computing requirement, to resolve a problem that the general-purpose processor does not have sufficient floating-point computing power and therefore cannot meet a heavy floating-point computing requirement in HPC, AI, or other scenarios, thereby shortening data processing, reducing system energy consumption, and improving system performance. The computing capability of the node may also be referred to as computing power of the node. Alternatively, the node 110 may have an accelerator integrated inside. The independently deployed accelerator and the node integrated with the accelerator support flexible plug and removal, so that a scale of the data processing system can be elastically expanded on demand, to meet the computing requirements in different application scenarios.

The plurality of nodes 110 are connected based on a high-speed interconnect link with a high bandwidth and a low latency. For example, as shown in FIG. 1, an interconnection device 120 (for example, a switch) is connected to the plurality of nodes 110 based on the high-speed interconnect link. For example, the interconnection device 120 is connected to the plurality of nodes 110 by using an optical fiber, a copper cable, or a copper cable. The interconnection device may be referred to as a switching chip or an interconnection chip.

The data processing system 100 including the plurality of nodes 110 to which the interconnection device 120 is connected based on the high-speed interconnect link may also be referred to as a super node. A plurality of super nodes are connected by using a data center network. The data center network includes a plurality of core switches and a plurality of aggregation switches. The data center network may form a scale domain. The plurality of super nodes may form a performance domain. More than two super nodes may form a macro cabinet. Macro cabinets may also be connected based on the data center network.

As shown in FIG. 1, the data processing system 100 further includes a controller 130 connected to the interconnection device 120. The controller 130 communicates with the interconnection device 120 based on a control plane link, and communicates with the plurality of nodes 110 based on a data plane link. The controller 130 is configured to control a node to access or exit the data processing system 100.

For example, the controller 130 allocates a node identifier to a node that requests access, configures the node identifier of the access node and a physical address of the access node onto an active node (for example, the plurality of nodes 110) that has accessed the data processing system 100, and configures a correspondence between the node identifier and a port onto the interconnection device. The node that requests access may be referred to as the access node for short. It may be understood that the interconnection device forwards data to the access node based on the correspondence between the node identifier of the access node and the port. Each active node stores a global physical address of the access node. The global physical address includes the node identifier of the access node and the physical address of the access node. Because the node identifier of the access node uniquely indicates the access node, the physical address in the global physical address uniquely indicates a storage space of the access node, that is, the physical address of the access node is an address of a storage space in the access node, so that the active node accesses the access node based on the global physical address of the access node.

It should be noted that the global physical address is an address that can be accessed by any one of a plurality of active nodes included in the data processing system 100. Any one of the plurality of active nodes included in the data processing system 100 stores a global physical address of another active node, so that the any active node accesses a storage space of the another active node based on the global physical address of the another active node.

For another example, when an active node exits the data processing system 100, the controller 130 ages a global physical address of the node that requests to exit. The node that requests to exit may be referred to as an exit node for short. The controller 130 sends a first aging message to the interconnection device 120, and broadcasts a second aging message. The first aging message indicates the interconnection device to age a correspondence between a node identifier of the exit node and a port. The second aging message indicates an active node to age the global physical address of the exit node. To be specific, each active node in the data processing system 100 receives the second aging message, and ages the node identifier of the node that requests to exit and a physical address of the node.

For example, when a first node requests to access the data processing system 100, the controller 130 allocates, to the first node, a first node identifier uniquely indicating the first node, configures a correspondence between the first node identifier and a first port onto the interconnection device, and configures a global physical address of the first node onto the plurality of nodes 110, where the global physical address of the first node includes the first node identifier and a physical address of the first node, so that the interconnection device forwards data to the first node based on the correspondence between the first node identifier and the first port, each node 110 stores the global physical address of the first node, and each node 110 accesses a storage space of the first node based on the global physical address of the first node, that is, determines, based on the first node identifier, to access the first node, and accesses the storage space of the first node based on the physical address of the first node. When the first node exits the data processing system 100, the interconnection device is controlled to age the correspondence between the first node identifier and the first port, and the plurality of nodes 110 are controlled to age the first node identifier and the physical address of the first node.

In a possible example, the node performs memory access according to a None-Posted Write instruction. When the first node accesses a memory of the first node, the None-Posted Write instruction indicates a physical address of the memory of the first node, so that the first node accesses the memory of the first node. When the first node accesses a memory of a remote node in the system, the None-Posted Write instruction indicates a node identifier of the remote node and a physical address of the remote node, so that the first node accesses the memory of the remote node.

The data processing system 100 supports running of big data, database, high-performance computing, artificial intelligence, distributed storage, cloud native, and other applications. In this embodiment of this application, the data includes service data of the big data, database, high-performance computing, artificial intelligence (Artificial Intelligence, AI), distributed storage, cloud native, and other applications. In some embodiments, the controller 130 may receive a processing request sent by a user operating a client, and control a job indicated by the processing request. The client may be a computer, or may be referred to as a workstation (workstation).

The controller and the node may be independent physical devices. The controller may also be referred to as a control node, a control device, or a naming node. The node may be referred to as a computing device, a data node, or a storage node.

In some embodiments, storage media of the nodes 110 in the data processing system 100 form a global memory pool through unified addressing to implement memory semantic access across nodes in the super node (cross-node memory semantic access for short). The global memory pool is a resource that is formed by the storage media of the nodes through unified addressing and that is shared by the nodes.

The global memory pool provided in this application may include a storage medium of a computing node in the super node and a storage medium of a storage node in the super node. The storage medium of the computing node includes at least one of a local storage medium in the computing node and an extended storage medium connected to the computing node. The storage medium of the storage node includes at least one of a local storage medium in the storage node and an extended storage medium connected to the storage node.

For example, the global memory pool includes the local storage medium in the computing node and the local storage medium in the storage node.

For another example, the global memory pool includes any one of the local storage medium in the computing node, the extended storage medium connected to the computing node, the local storage medium in the storage node, and the extended storage medium connected to the storage node.

For another example, the global memory pool includes the local storage medium in the computing node, the extended storage medium connected to the computing node, the local storage medium in the storage node, and the extended storage medium connected to the storage node.

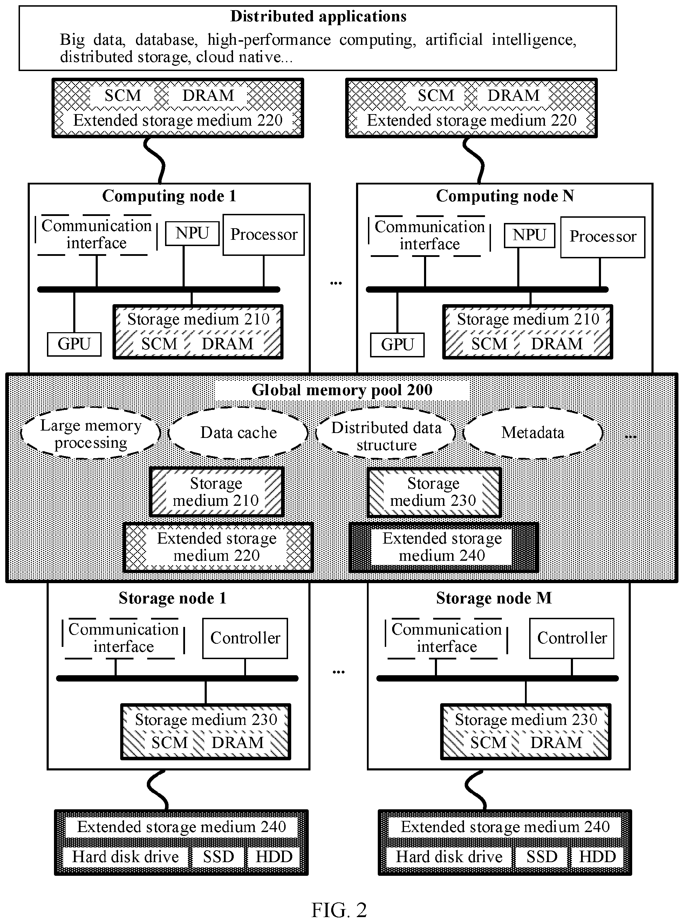

For example, FIG. 2 is a diagram of a deployment scenario of a global memory pool according to this application. The global memory pool 200 includes a storage medium 210 in each of N computing nodes, an extended storage medium 220 connected to each of the N computing nodes, a storage medium 230 in each of M storage nodes, and an extended storage medium 240 connected to each of the M storage nodes.

It should be understood that a storage capacity of the global memory pool may include a part of a storage capacity in the storage medium of the computing node and a part of a storage capacity in the storage medium of the storage node. The global memory pool is a storage medium that undergoes unified addressing and that can be accessed by both the computing node and the storage node in the super node. The storage capacity of the global memory pool may be used by the computing node or the storage node by using large memory, distributed data structure, data cache, metadata, or other memory interfaces. The computing node may run an application to perform memory operations on the global memory pool by using these memory interfaces. In this way, the global memory pool constructed based on the storage capacity of the storage medium of the computing node and the storage medium of the storage node provides a unified memory interface in a northbound direction for the computing node to use, so that the computing node uses the unified memory interface to write data into the storage space provided by the computing node or the storage space provided by the storage node in the global memory pool, thereby implementing data computing and storage based on a memory operation instruction, reducing a data processing latency, and increasing a data processing speed.

The foregoing is described by using an example in which storage media in the computing nodes and storage media in the storage nodes construct the global memory pool. A deployment manner of the global memory pool may be flexible. This is not limited in this embodiment of this application. For example, the global memory pool is constructed by the storage media of the storage nodes. For another example, the global memory pool is constructed by the storage media of the computing nodes. When the global memory pool is constructed only by the storage media of the storage nodes or the storage media of the computing nodes, occupation of a storage resource on a storage side can be reduced, and a more flexible expansion solution can be provided.

As classified based on storage medium types, the storage media of the global memory pool provided in this embodiment of this application include a dynamic random access memory (Dynamic Random Access Memory, DRAM), a solid state drive (Solid State Disk or Solid State Drive, SSD), and a storage-class memory (storage-class-memory, SCM).

In some embodiments, the global memory pool may be set based on a storage medium type, that is, one type of memory pool is constructed by using one type of storage medium, and different types of global memory pools are constructed by using different types of storage media, so that the global memory pools are used in different scenarios, and a computing node selects a storage medium based on an access feature of an application, thereby enhancing system control permission of a user, improving system experience of the user, and expanding application scenarios to which the system is applicable. For example, unified addressing is performed on DRAMs in the computing nodes and DRAMs in the storage nodes to form a DRAM memory pool. The DRAM memory pool is used in a scenario that requires high access performance, a moderate data capacity, and no data persistence. For another example, unified addressing is performed on SCMs in the computing nodes and SCMs in the storage nodes to form an SCM memory pool. The SCM memory pool is used in a scenario that is insensitive to access performance and that requires a large data capacity and data persistence.

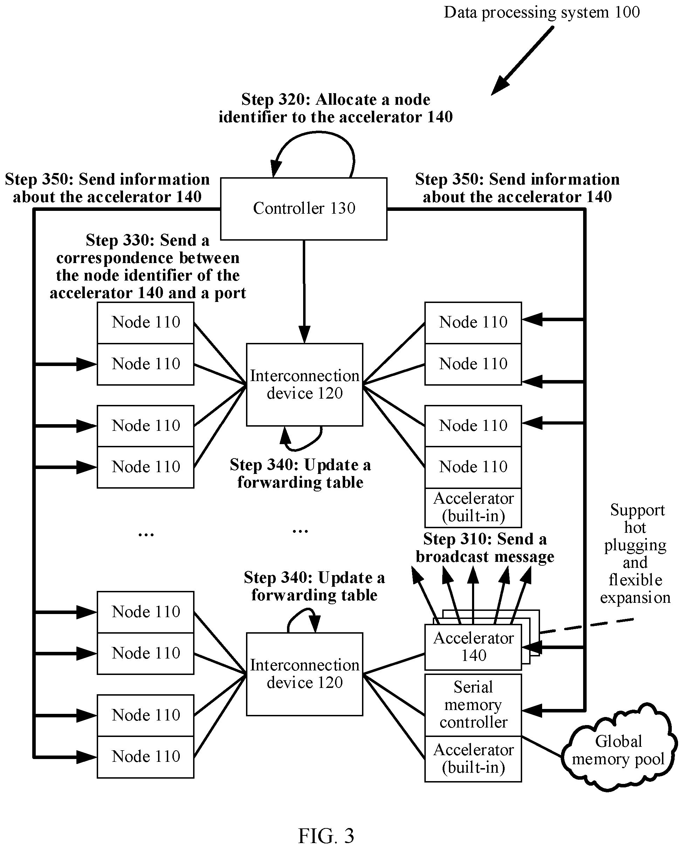

With reference to FIG. 3 to FIG. 6, the following describes in detail implementations of a data processing method provided in this application.

FIG. 3 is a schematic flowchart of a method for accessing a data processing system by a node according to this application. Herein, an example in which a scale of the data processing system 100 is expanded and an accelerator 140 requests to access the data processing system 100 is used for description. As shown in FIG. 3, the method includes the following steps.

Step 310: The accelerator 140 sends a broadcast message. The broadcast message indicates to perform authentication on the accelerator 140.

After the accelerator 140 establishes a physical connection to the interconnection device 120 in the data processing system 100 and is powered on, the accelerator 140 requests to access the data processing system 100. For example, the accelerator 140 sends a broadcast message, that is, sends a broadcast message to the plurality of nodes 110 and the interconnection device 120 in the data processing system 100, to request to access the data processing system 100. The broadcast message includes a device identifier (Device_ID) of the accelerator 140 and a physical address of a storage space of the accelerator 140. The accelerator 140 stores the device identifier, and the device identifier may be preconfigured before the accelerator 140 is delivered from a factory. The nodes 110 receive and discard the broadcast message. The controller 130 receives the broadcast message, and performs authentication on the accelerator 140 based on the indication of the broadcast message, that is, performs step 320 to step 340.

Step 320: The controller 130 allocates a node identifier to the accelerator 140.

The controller 130 stores a device identifier table. The device identifier table includes a device identifier of an authenticated active node in the data processing system 100. The controller 130 receives the broadcast message, and searches the device identifier table based on the device identifier of the accelerator 140. If the controller 130 determines that the device identifier table includes the device identifier of the accelerator 140, it indicates that the accelerator 140 has accessed the data processing system 100, and the accelerator 140 is an active node. If the controller 130 determines that the device identifier table does not include an identifier that is the same as the device identifier of the accelerator 140, it indicates that the accelerator 140 is a node that requests authentication, and the controller 130 updates the device identifier table, that is, writes the device identifier of the accelerator 140 into the device identifier table. Further, the controller 130 may allocate a node identifier to the accelerator 140. The node identifier of the accelerator 140 uniquely indicates the accelerator 140. The interconnection device 120 sends data to the accelerator 140 based on the node identifier of the accelerator 140, so that the nodes 110 communicate with the accelerator 140.

Step 330: The controller 130 sends a correspondence between the node identifier of the accelerator 140 and a port to the interconnection device 120.

The controller 130 sends the correspondence between the node identifier of the accelerator 140 and the port to the interconnection device 120 by using a physical medium such as an optical fiber, a copper cable, or a copper cable connected to the interconnection device 120.

Step 340: The interconnection device 120 updates a forwarding table based on the correspondence between the node identifier and the port.

The forwarding table indicates the interconnection device 120 to forward, based on a correspondence between a node identifier and a port, communication traffic to a node indicated by the node identifier. The forwarding table includes the correspondence between the node identifier and the port.

For example, the port corresponding to the node identifier of the accelerator 140 may be configured to indicate the interconnection device 120 to forward data to the accelerator 140. After receiving the correspondence between the node identifier of the accelerator 140 and the port, the interconnection device 120 updates the forwarding table, that is, writes the correspondence between the node identifier of the accelerator 140 and the port into the forwarding table.

In an example, the correspondence between the node identifier and the port may be presented in a form of a table, as shown in Table 1.

**Table 1**

| Node identifier | Port |
|---|---|
| Node identifier 1 | Port 1 |
| Node identifier 2 | Port 2 |

As shown in Table 1, it is assumed that the node identifier of the accelerator 140 is the node identifier 1, and the interconnection device 120 is connected to the accelerator 140 by using the port 1. The interconnection device 120 receives the node identifier 1, searches Table 1 based on the node identifier 1, determines that the node identifier 1 corresponds to the port 1, and sends data to the accelerator 140 through the port 1.

It should be noted that Table 1 merely shows, in a form of a table, a storage form of the correspondence in a storage device, but does not limit the storage form of the correspondence in the storage device. Certainly, the storage form of the correspondence in the storage device may alternatively be another storage form. This is not limited in this embodiment of this application.

Step 350: The controller 130 sends information about the accelerator 140 to the plurality of nodes 110.

The controller 130 sends the node identifier of the accelerator 140, the device identifier of the accelerator 140, and the physical address of the storage space of the accelerator 140 to the plurality of nodes 110. The plurality of nodes 110 are authenticated active nodes (Active Nodes) in the data processing system 100.

The node identifier of the accelerator 140 and the physical address of the accelerator 140 may be used as a global physical address of the accelerator 140 in the data processing system 100. The node identifier of the accelerator 140 uniquely indicates the accelerator 140. The physical address of the accelerator 140 is an address of the storage space in the accelerator 140. The global physical address of the accelerator 140 uniquely indicates the storage space of the accelerator 140 in the data processing system 100. Each active node stores the node identifier of the accelerator 140 and the physical address of the storage space of the accelerator 140, so that the active node performs a read operation or a write operation on the storage space of the accelerator 140 based on the node identifier of the accelerator 140 and the physical address of the accelerator 140, that is, writes data into the storage space indicated by the physical address of the accelerator 140, or reads data from the storage space indicated by the physical address of the accelerator 140.

Each active node searches a device list based on the device identifier of the accelerator 140, determines a software driver corresponding to the device identifier of the accelerator 140, and runs the software driver corresponding to the device identifier of the accelerator 140, so that the plurality of nodes 110 communicate with the accelerator 140, to implement a function of accessing the accelerator 140.

In this way, different from configuration performed in a static mode in a startup phase of a data processing system, a scale of the data processing system can be elastically expanded on demand, access of an accelerator is supported, and a storage space of a global memory is increased, to meet computing requirements in different application scenarios.

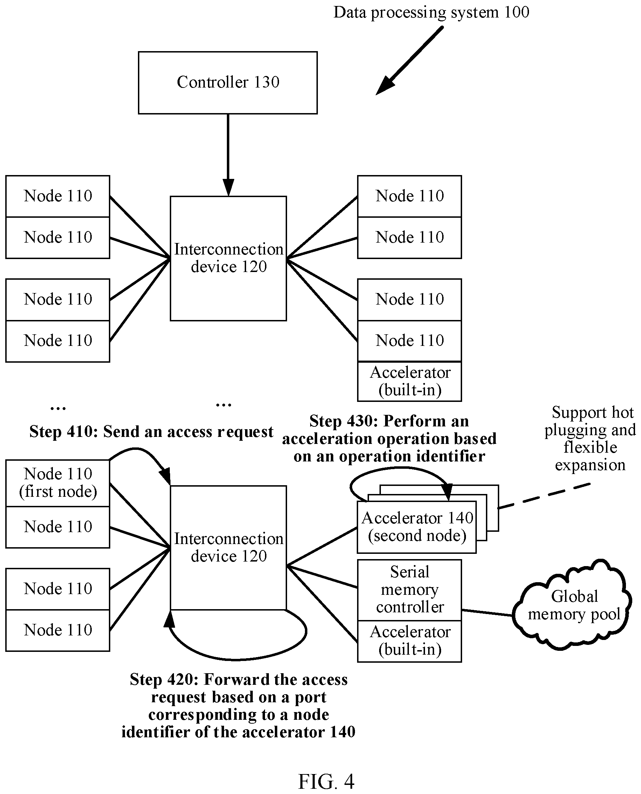

After the accelerator 140 accesses the data processing system 100, the active node in the data processing system 100 may communicate with the accelerator 140 based on the node identifier of the accelerator 140 and the physical address of the accelerator 140. It is assumed that the first node is the node 110, the second node is the accelerator 140, and the node 110 requests the accelerator 140 to perform an acceleration operation. FIG. 4 is a schematic flowchart of a data processing method according to this application. As shown in FIG. 4, the method includes the following steps.

Step 410: The node 110 sends an access request. The access request indicates the accelerator 140 to perform an acceleration operation.

The access request may include the node identifier of the accelerator 140, so that the interconnection device 120 forwards the access request based on the node identifier of the accelerator 140.

The access request may further include a source address, a destination address, and an operation identifier, so that the accelerator 140 obtains to-be-processed data based on the source address, processes the to-be-processed data, and stores processed data based on the destination address. The source address indicates a node identifier and a physical address of a node that stores the to-be-processed data. The destination address indicates a node identifier and a physical address of a node that stores the processed data.

It should be noted that, in this embodiment of this application, the source address including the node identifier and the physical address and the destination address including the node identifier and the physical address may be global physical addresses. A data processing request of a node is extended to different nodes in the system, and to-be-processed data is obtained or processed data is stored based on a physical address of a node uniquely indicated by a node identifier, so that an accelerator resource in the system can be shared by a plurality of nodes, to adapt to computing requirements in different application scenarios.

In addition, the node that stores the to-be-processed data and the node that stores the processed data are not limited in this embodiment of this application. For example, the source address includes a node identifier and a physical address of a node that requests an acceleration operation to be performed. The destination address includes a node identifier and a physical address of a node that performs the acceleration operation. The node 110 requests the accelerator 140 to perform an acceleration operation. The source address includes a node identifier of the node 110 and a physical address of the node 110, and the destination address includes the node identifier of the accelerator 140 and the physical address of the accelerator 140. For another example, the physical address included in the source address may indicate any node 110 or the accelerator 140. The physical address included in the destination address may indicate any node 110 or the accelerator 140.

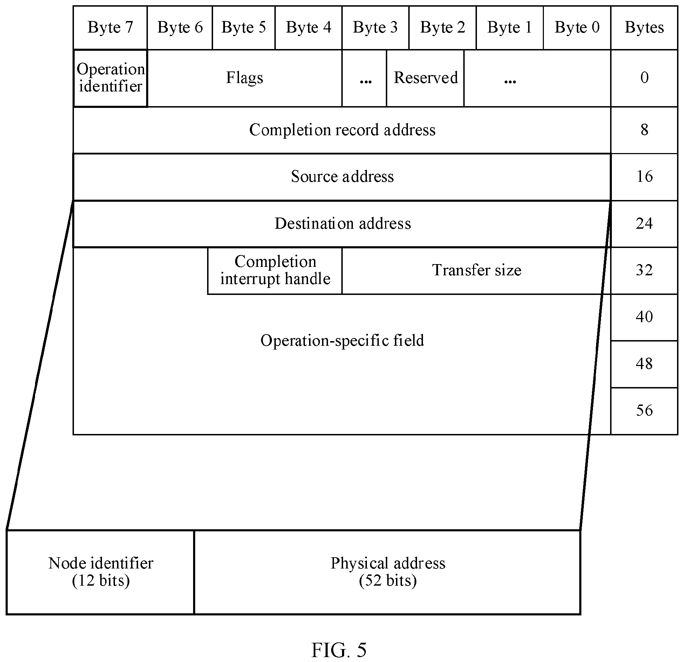

In some embodiments, the node 110 may reuse a descriptor (Descriptor) in a domain specific structure (Domain Specific Architecture, DSA) architecture to indicate the acceleration operation. For example, FIG. 5 is a diagram of a structure of a descriptor according to this application. The descriptor includes an operation identifier, a source address, and a destination address.

The source address indicates a storage location of to-be-processed data used for the acceleration operation. The destination address indicates a storage location of a result of the acceleration operation, that is, a storage location of processed data.

For example, the descriptor may be a 64-byte descriptor. A length of the source address is 64 bits. A length of the destination address is 64 bits. A length of a node identifier may be 12 bits. A length of a physical address may be 52 bits. The length of the node identifier and the length of the physical address in the descriptor are adaptively configured based on different memory configurations in nodes. The memory configuration includes a storage capacity and a memory type. The memory type includes a DRAM, an SSD, and an SCM.

The descriptor may further include an operation-specific field, and the operation-specific field indicates an operation that can be customized based on different operation identifiers.

The node 110 generates a 64-byte descriptor by using an accelerator driver, runs a None-Posted Write instruction, and writes the descriptor into a request queue of the accelerator 140 by using an interconnection bus between the node 110 and the interconnection device 120. The node 110 sends, to the accelerator 140 in a memory-mapped input/output (Memory-Mapped I/O, MMIO) manner, an address of a register that reads data from or write data into the request queue of the node 110, and the accelerator 140 accesses the register based on an interconnection bus by using the None-Posted Write instruction.

In addition, the operation identifier may also be referred to as an operator. The operation identifier indicates the acceleration operation to be performed. The acceleration operation includes any one of the following:
Memory swap (SWAP): It indicates data block exchange between memories of nodes.

Reduce (Reduce): It means performing arithmetic or logical calculation on a plurality of pieces of local data.

Broadcast (Broadcast): It means broadcasting a local data block to the nodes in the system.

Search (Search): It means performing a search operation on a database and returning a matching result.

Encryption/Decryption (Encryption/Decryption): It is a data block encryption or decryption operation.

Compress/Decompress (Compress/Decompress): It is a data block compression/decompression operation.

Step 420: The interconnection device 120 forwards the access request based on the port corresponding to the node identifier of the accelerator 140.

The interconnection device 120 stores the correspondence between the node identifier and the port. After receiving the access request, the interconnection device 120 obtains the node identifier of the accelerator 140, searches the forwarding table, and forwards the access request to the accelerator 140 based on the port that corresponds to the node identifier of the accelerator 140 and that is determined based on the forwarding table.

Step 430: The accelerator 140 performs the acceleration operation based on the operation identifier.

The accelerator 140 reads the descriptor from the request queue, parses out fields of the descriptor, and performs the acceleration operation indicated by the operation identifier.

For example, the accelerator 140 allocates a segment of storage space in a local memory of the accelerator 140 based on a requirement of the descriptor. The segment of storage space may be configured to store intermediate data for performing the acceleration operation by the accelerator 140.

For another example, if the operation identifier indicates data processing on a remote node, the accelerator 140 drives a local SDMA engine to write data into a memory of the remote node (for example, the node 110 that sends the access request) into the local memory of the accelerator 140.

For another example, if the descriptor indicates a request for local data of the accelerator 140, a data read engine is driven to read data in a network or the local memory and copy the data into a local cache of the accelerator 140.

It may be understood that the accelerator 140 reads the to-be-processed data based on the node identifier and the physical address that are indicated by the source address. The physical address indicated by the source address includes any one of a physical address of a storage space in the node 110 that sends the access request, a physical address of a storage space in another node 110 in the system, or the physical address of the storage space in the accelerator 140. That is, a location at which the accelerator 140 reads the to-be-processed data includes any one of the storage space of the node 110 that sends the access request, a storage space of another node 110 in the system, and the storage space of the accelerator 140.

The accelerator 140 stores the processed data of the acceleration operation based on the node identifier and the physical address that are indicated by the destination address, so that the node 110 that sends the access request reads the processed data of the acceleration operation based on the physical address indicated by the destination address. The physical address indicated by the destination address includes any one of the physical address of the storage space in the node 110 that sends the access request, a physical address of a storage space in another node 110 in the system, or the physical address of the storage space in the accelerator 140. That is, the accelerator 140 stores the processed data at any one of the following locations: the storage space of the node 110 that sends the access request, a storage space of another node 110 in the system, and the storage space of the accelerator 140.

Optionally, the physical address indicated by the source address and the physical address indicated by the destination address may indicate a storage space of a storage medium in the global memory pool. That is, the accelerator 140 may read the to-be-processed data from the global memory pool, and/or store the processed data into the global memory pool, to increase a data processing speed.

The accelerator 140 performs the acceleration operation on the locally cached to-be-processed data based on the operation identifier described in the descriptor. For example, the operation identifier indicates a compression operation, and the accelerator 140 performs the compression operation on the locally cached to-be-processed data. For another example, the operation identifier indicates an encryption operation, and the accelerator 140 performs the encryption operation on the locally cached to-be-processed data.

After performing the acceleration operation, the accelerator 140 releases the local cache. The accelerator 140 may further trigger, by using a request completion interrupt (Request Completion Interrupt) message, an interrupt of the node that sends the request descriptor, and the node 110 that sends the access request obtains a result of the acceleration operation.

In this way, a job of a general-purpose processor (such as a CPU) is offloaded to an accelerator, so that the accelerator processes the job (such as an HPC, big data, or database job) that has a high computing requirement, to resolve a problem that the general-purpose processor does not have sufficient floating-point computing power and therefore cannot meet a heavy floating-point computing requirement in HPC, AI, or other scenarios, thereby shortening data processing, reducing system energy consumption, and improving system performance. An independently deployed accelerator and a node integrated with an accelerator support flexible plug and removal, so that a scale of the data processing system can be elastically expanded on demand, to meet the computing requirements in different application scenarios.

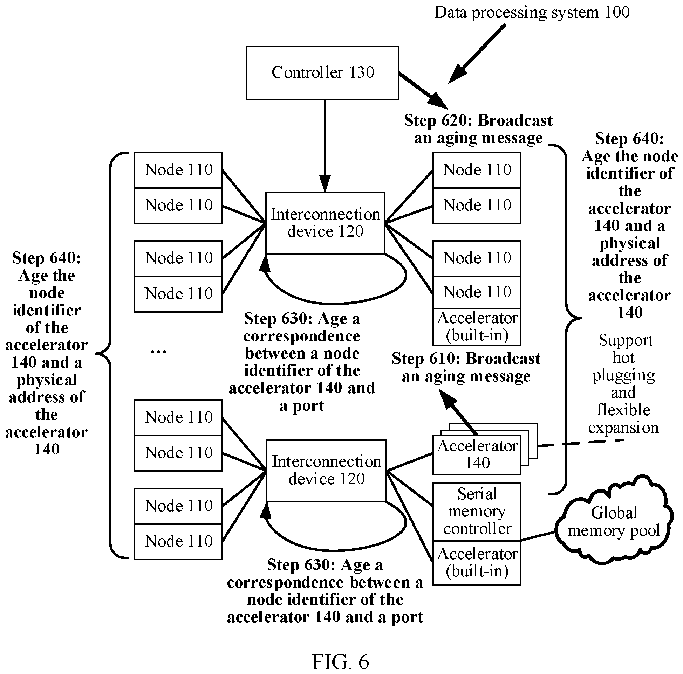

In some other embodiments, any active node in the data processing system may exit the system. FIG. 6 is a schematic flowchart of a method for exiting a data processing system by a node according to this application. Herein, an example in which the accelerator 140 requests to exit the data processing system 100 is used for description. As shown in FIG. 6, the method includes the following steps.

In some embodiments, the accelerator 140 may actively exit the data processing system, that is, the accelerator 140 performs step 610.

Step 610: The accelerator 140 broadcasts an aging message. The aging message indicates the accelerator 140 to exit the data processing system. Then, step 630 and step 640 are performed.

In some other embodiments, when the controller 130 receives link fault information sent by the interconnection device 120, or a heartbeat message between the accelerator 140 and another node 110 times out, step 620 is performed.

Step 620: The controller 130 broadcasts an aging message. The aging message indicates the accelerator 140 to exit the data processing system. Then, step 630 and step 640 are performed.

The aging message may include the node identifier of the accelerator 140, the physical address of the accelerator 140, and the device identifier of the accelerator 140.

Step 630: The interconnection device 120 ages the correspondence between the node identifier of the accelerator 140 and the port.

For example, the interconnection device 120 receives a first aging message, and deletes, from the forwarding table, a forwarding entry corresponding to the node identifier of the accelerator 140 and the port.

Step 640: The node 110 ages the node identifier of the accelerator 140 and the physical address of the accelerator 140.

For example, after receiving a second aging message, the node 110 deletes the stored node identifier and physical address of the accelerator 140 and the software driver that is in the device list and that corresponds to the device identifier of the accelerator 140.

In this way, a controller and an interconnection device are disposed in the data processing system, and a node can be elastically added or removed based on a node access mechanism and exit mechanism, thereby implementing a super-node architecture that can be elastically expanded. This resolves a problem that a conventional super-node architecture cannot be dynamically expanded, avoids a problem that a conventional I/O bus architecture has a limited scale and a low bandwidth, and supports a dynamic fault tolerance mechanism when a node or an interconnection device is faulty.

It may be understood that, to implement functions in the foregoing embodiments, the controller includes a corresponding hardware structure and/or software module for performing the functions. A person skilled in the art should be easily aware that, with reference to units and method steps of examples described in embodiments disclosed in this application, this application can be implemented by hardware or a combination of hardware and computer software. Whether a function is performed by hardware or hardware driven by computer software depends on particular application scenarios and design constraint conditions of the technical solutions.

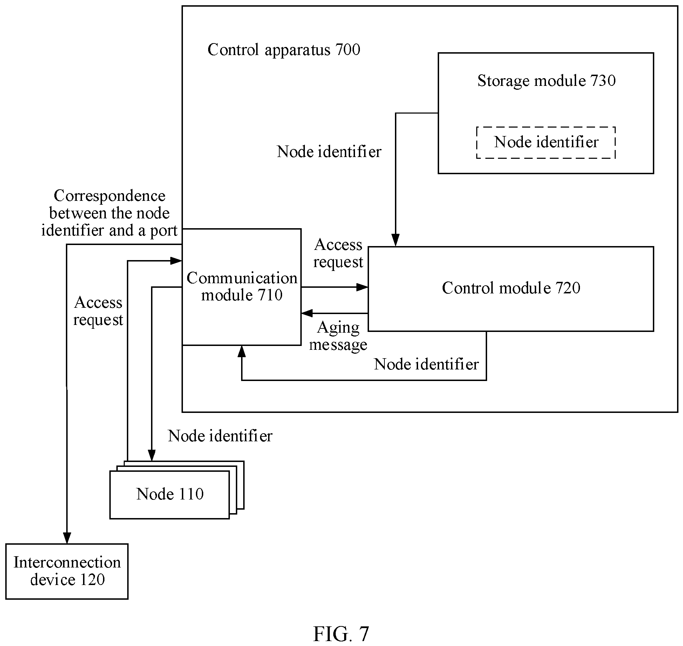

The foregoing describes in detail the data processing method according to embodiments with reference to FIG. 1 to FIG. 6. The following describes a control apparatus and a data processing node according to embodiments with reference to FIG. 7.

FIG. 7 is a diagram of a structure of a possible control apparatus according to an embodiment. The control apparatus may be configured to implement a function of the controller in the foregoing method embodiments, and therefore can also achieve beneficial effects of the foregoing method embodiments. In this embodiment, the control apparatus may be the controller 130 shown in FIG. 3, FIG. 4, or FIG. 6, or may be a module (for example, a chip) used in a server.

As shown in FIG. 7, the control apparatus 700 includes a communication module 710, a control module 720, and a storage module 730. The control apparatus 700 is configured to implement a function of the controller 130 in the method embodiments shown in FIG. 3, FIG. 4, and FIG. 6.

The communication module 710 is configured to receive an access request sent by a second node. The access request indicates to perform authentication on the second node.

The control module 720 is configured to allocate a second node identifier to the second node when the second node requests to access a data processing system. The second node identifier uniquely indicates the second node. For example, the control module 720 is configured to perform step 320 in FIG. 3.

The communication module 710 is further configured to send a correspondence between the second node identifier and a second port to an interconnection device. The second port corresponding to the second node identifier is configured to forward a message to the second node. For example, the control module 720 is configured to perform step 330 in FIG. 3.

The communication module 710 is further configured to send a global physical address of the second node to another node in the data processing system, for example, broadcast the node identifier and a physical address of the second node to another node in the data processing system. For example, the control module 720 is configured to perform step 350 in FIG. 3.

The communication module 710 is further configured to send a first aging message to the interconnection device. The first aging message indicates the interconnection device to age the correspondence between the second node identifier and the second port. For example, the control module 720 is configured to perform step 620 in FIG. 6.

The communication module 710 is further configured to broadcast a second aging message. The second aging message indicates to age the second node identifier and the physical address of the second node.

The storage module 730 is configured to store a node identifier of a node, so that the control module 720 controls the node to access the data processing system and exit the data processing system.

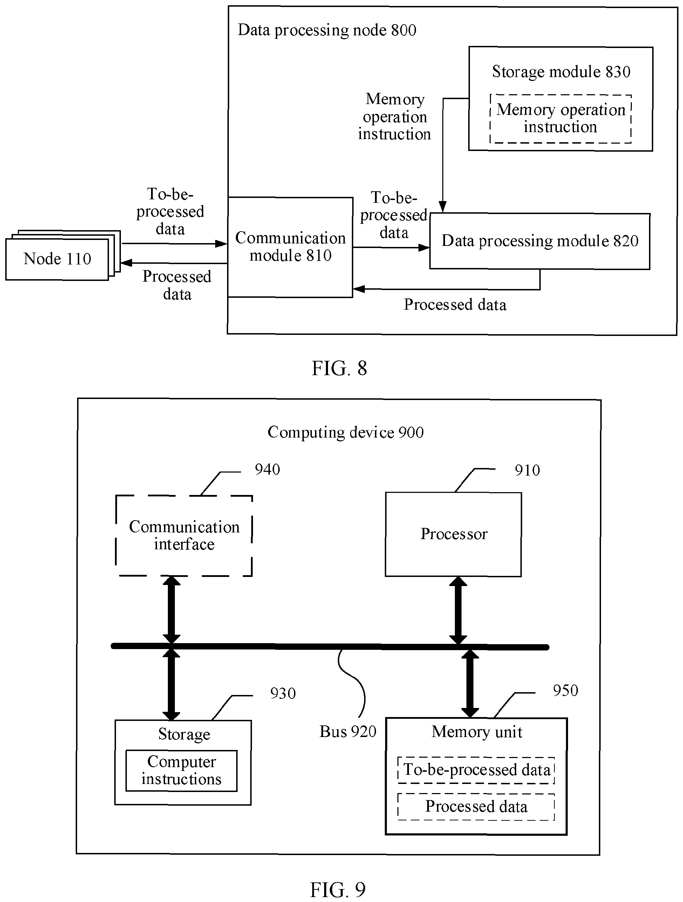

FIG. 8 is a diagram of a structure of a possible data processing node according to an embodiment. The data processing node may be configured to implement a function of a node in the data processing system in the foregoing method embodiments, and therefore can also achieve beneficial effects of the foregoing method embodiments. In this embodiment, the data processing node may be the node 110 or the accelerator 140 shown in FIG. 3, FIG. 4, or FIG. 6, or may be a module (for example, a chip) used in a server.

As shown in FIG. 8, the data processing node 800 includes a communication module 810, a data processing module 820, and a storage module 830. The data processing node 800 is configured to implement a function of the node 110 or the accelerator 140 in the method embodiments shown in FIG. 3, FIG. 4, and FIG. 6.

The communication module 810 is configured to receive an access request sent by the first node. The access request includes a source address, a destination address, and an operation identifier, the source address indicates a node identifier and a physical address of a node that stores to-be-processed data, and the destination address indicates a node identifier and a physical address of a node that stores processed data.

The data processing module 820 is configured to perform an acceleration operation on the to-be-processed data based on the operation identifier to obtain the processed data, and store the processed data based on the destination address indicated by the first node. For example, the data processing module 820 is configured to perform step 430 in FIG. 4.

The storage module 830 is configured to store a memory operation instruction, the to-be-processed data, or the processed data, so that the data processing module 820 performs the acceleration operation.

It should be understood that the control apparatus 700 and the data processing node 800 in embodiments of this application may be implemented by using an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any combination thereof. The data processing methods shown in FIG. 3, FIG. 4, and FIG. 6 may alternatively be implemented by using software. In this case, the control apparatus 700, the data processing node 800, and modules thereof may be software modules.

The control apparatus 700 and the data processing node 800 according to embodiments of this application may correspondingly perform the methods described in embodiments of this application, and the foregoing and other operations and/or functions of units in the control apparatus 700 and the data processing node 800 are respectively used to implement corresponding procedures of the methods in FIG. 3, FIG. 4, and FIG. 6. For brevity, details are not described herein again.

FIG. 9 is a diagram of a structure of a computing device 900 according to an embodiment. As shown in the figure, the computing device 900 includes a processor 910, a bus 920, a storage 930, a communication interface 940, and a memory unit 950 (which may also be referred to as a main memory (main memory) unit). The processor 910, the storage 930, the memory unit 950, and the communication interface 940 are connected by using the bus 920.

It should be understood that, in this embodiment, the processor 910 may be a CPU, or the processor 910 may be another general-purpose processor, a digital signal processor (digital signal processing, DSP), an ASIC, an FPGA or another programmable logical device, a discrete gate or a transistor logical device, a discrete hardware component, or the like. The general-purpose processor may be a microprocessor or any conventional processor or the like.

Alternatively, the processor may be a graphics processing unit (graphics processing unit, GPU), a neural-network processing unit (neural-network processing unit, NPU), a microprocessor, an ASIC, or one or more integrated circuits configured to control program execution of the solutions of this application.

The communication interface 940 is configured to implement communication between the computing device 900 and an external device or component. In this embodiment, when the computing device 900 is configured to implement a function of the controller 130 shown in FIG. 3, the communication interface 940 is configured to obtain a broadcast message, and the processor 910 allocates a node identifier to the node 110, and broadcast the node identifier and a physical address of the node. When the computing device 900 is configured to implement a function of the controller 130 shown in FIG. 6, the communication interface 940 is configured to broadcast an aging message.

The bus 920 may include a path, configured to transfer information between the foregoing components (for example, the processor 910, the memory unit 950, and the storage 930). In addition to a data bus, the bus 920 may further include a power bus, a control bus, a status signal bus, and the like. However, for clear description, various types of buses are marked as the bus 920 in the figure. The bus 920 may be a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL) bus, a cache coherent interconnect for accelerators (cache coherent interconnect for accelerators, CCIX) bus, or the like. The bus 920 may be classified into an address bus, a data bus, a control bus, and the like.

In an example, the computing device 900 may include a plurality of processors. The processor may be a multi-CPU (multi-CPU) processor. The processor herein may be one or more devices, circuits, and/or computing units configured to process data (for example, computer program instructions). In this embodiment, when the computing device 900 is configured to implement a function of the accelerator 140 shown in FIG. 4, the processor 910 is further configured to: obtain to-be-processed data based on a source address indicated by a first node; perform an acceleration operation on the to-be-processed data based on an operation identifier indicated by the first node, to obtain processed data; and store the processed data based on a destination address indicated by the first node. The source address indicates a node identifier and a physical address of a node that stores the to-be-processed data, and the destination address indicates a node identifier and a physical address of a node that stores the processed data.

When the computing device 900 is configured to implement a function of the controller 130 shown in FIG. 4, the processor 910 is further configured to: when a node requests to access a data processing system, allocate a node identifier to the node; send a global physical address of the node to nodes in the data processing system; send a correspondence between the node identifier and a port to an interconnection device, where the port corresponding to the node identifier is configured to forward a message to the node; and age the global physical address of the node and the correspondence between the node identifier and the port when the node exits the data processing system.

When the computing device 900 is configured to implement a function of the interconnection device 120 shown in FIG. 4, the processor 910 is further configured to forward, based on a correspondence between a node identifier and a port, data indicating communication between nodes.

It should be noted that, FIG. 9 shows only an example in which the computing device 900 includes one processor 910 and one storage 930. The processor 910 and the storage 930 herein each indicate a type of device or component. In a specific embodiment, a quantity of each type of devices or components may be determined based on a service requirement.

The memory unit 950 may correspond to a global memory pool configured to store information such as to-be-processed data and processed data in the foregoing method embodiments. The memory unit 950 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 930 may correspond to a storage medium configured to store information such as computer instructions, a memory operation instruction, and a node identifier in the foregoing method embodiments, for example, a magnetic disk, such as a mechanical hard disk drive or a solid state drive.

The computing device 900 may be a general-purpose device or a special-purpose device. For example, the computing device 900 may be an edge device (for example, a box carrying a chip with a processing capability), or the like. Optionally, the computing device 900 may alternatively be a server or another device having a computing capability.

It should be understood that the computing device 900 according to this embodiment may correspond to the control apparatus 700 and the data processing node 800 in the foregoing embodiments, and may correspond to a corresponding body in any one of the methods in FIG. 3, FIG. 4, and FIG. 6, and the foregoing and other operations and/or functions of modules in the control apparatus 700 and the data processing node 800 are respectively used to implement corresponding procedures of the methods in FIG. 3, FIG. 4, and FIG. 6. For brevity, details are not described herein again.

The method steps in embodiments may be implemented by hardware, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in the computing device. Certainly, the processor and the storage medium may alternatively exist as discrete components in the computing device.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or a part of the procedures or functions in embodiments of this application are executed. The computer may be a general-purpose computer, a special-purpose computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, or may be an optical medium, for example, a digital video disc (digital video disc, DVD), or may be a semiconductor medium, for example, a solid state drive (solid state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing system, wherein the data processing system comprises a plurality of nodes and a controller, the plurality of nodes comprise a first node and a second node, and the plurality of nodes are connected to the controller by using a high-speed interconnect link;
the controller is configured to allocate a second node identifier to the second node when the second node requests to access the data processing system, wherein a global physical address of the second node in the data processing system is a node identifier of the second node and a physical address of the second node; and
the controller is further configured to send the global physical address of the second node to the first node.

2. The system according to claim 1, wherein the data processing system further comprises an interconnection device, and the interconnection device is connected to the plurality of nodes based on the high-speed interconnect link; and
the controller is further configured to send a correspondence between the second node identifier and a port to the interconnection device, wherein the port corresponding to the second node identifier is configured to forward a message to the second node.

3. The system according to claim 2, wherein
the interconnection device is configured to forward, based on the correspondence between the second node identifier and the port, a message indicating that the first node accesses the second node, wherein the second node identifier uniquely indicates the second node.

4. The system according to any one of claims 1 to 3, wherein storage media of the plurality of nodes form a global memory pool through unified addressing.

5. The system according to any one of claims 1 to 4, wherein
the second node is configured to obtain to-be-processed data based on a source address indicated by the first node, wherein the source address indicates a node identifier and a physical address of a node that stores the to-be-processed data; and
the second node is further configured to: process the to-be-processed data, and store processed data based on a destination address indicated by the first node, wherein the destination address indicates a node identifier and a physical address of a node that stores the processed data.

6. The system according to claim 5, wherein the global memory pool formed by the storage media of the plurality of nodes comprises a storage space indicated by the source address and/or a storage space indicated by the destination address.

7. The system according to claim 5 or 6, wherein the second node is specifically configured to perform an acceleration operation on the to-be-processed data based on an operation identifier indicated by the first node, to obtain the processed data.

8. The system according to any one of claims 5 to 7, wherein
the first node is further configured to access a storage space of the first node based on a physical address of the first node.

9. The system according to any one of claims 1 to 8, wherein the second node comprises any one of a processor, an accelerator, and a memory controller.

10. The system according to any one of claims 1 to 9, wherein
the controller is further configured to: when the second node exits the data processing system, control the first node to age the global physical address of the second node, and control the interconnection device to age the correspondence between the second node identifier and the port.

11. A data processing method, wherein a data processing system comprises a plurality of nodes, the plurality of nodes comprise a first node and a second node, and the plurality of nodes and the controller are connected by using a high-speed interconnection link; and the method comprises:
when the second node requests to access the data processing system, allocating, by the controller, a second node identifier to the second node, wherein a global physical address of the second node in the data processing system is a node identifier of the second node and a physical address of the second node; and
sending, by the controller, the global physical address of the second node to the first node.

12. The method according to claim 11, wherein the data processing system further comprises an interconnection device, and the interconnection device is connected to the plurality of nodes based on the high-speed interconnect link; and the method further comprises:
sending, by the controller, a correspondence between the second node identifier and a port to the interconnection device, wherein the port corresponding to the second node identifier is configured to forward a message to the second node.

13. The method according to claim 12, wherein the method further comprises:
forwarding, by the interconnection device based on the correspondence between the second node identifier and the port, a message indicating that the first node accesses the second node, wherein the second node identifier uniquely indicates the second node.

14. The method according to any one of claims 11 to 13, wherein storage media of the plurality of nodes form a global memory pool through unified addressing.

15. The method according to any one of claims 11 to 14, wherein the method further comprises:
obtaining, by the second node, to-be-processed data based on a source address indicated by the first node, wherein the source address indicates a node identifier and a physical address of a node that stores the to-be-processed data; and
processing, by the second node, the to-be-processed data, and storing processed data based on a destination address indicated by the first node, wherein the destination address indicates a node identifier and a physical address of a node that stores the processed data.

16. The method according to claim 15, wherein the global memory pool formed by the storage media of the plurality of nodes comprises a storage space indicated by the source address and/or a storage space indicated by the destination address.

17. The method according to claim 15 or 16, wherein the processing, by the second node, the to-be-processed data comprises:
performing, by the second node, an acceleration operation on the to-be-processed data based on an operation identifier indicated by the first node, to obtain the processed data.

18. The method according to any one of claims 15 to 17, wherein the method further comprises:
accessing, by the first node, a storage space of the first node based on a physical address of the first node.

19. The method according to any one of claims 11 to 18, wherein the second node comprises any one of a processor, an accelerator, and a memory controller.

20. The method according to any one of claims 11 to 19, wherein the method further comprises:
when the second node exits the data processing system, controlling, by the controller, the first node to age the global physical address of the second node, and controlling the interconnection device to age the correspondence between the second node identifier and the port.

21. A control apparatus, wherein the control apparatus is used in a data processing system, the data processing system comprises a plurality of nodes connected based on a high-speed interconnection technology, the plurality of nodes comprise a first node and a second node, and the apparatus comprises:
a control module, configured to allocate a second node identifier to the second node when the second node requests to access the data processing system, wherein the second node identifier uniquely indicates the second node, and a global physical address of the second node in the data processing system is a node identifier of the second node and a physical address of the second node, wherein
the control module is further configured to send the global physical address of the second node to the first node.

22. The apparatus according to claim 21, wherein the data processing system further comprises an interconnection device, and the interconnection device is connected to the plurality of nodes based on a high-speed interconnect link; and the apparatus further comprises a communication module, wherein
the communication module is further configured to send a correspondence between the second node identifier and a port to the interconnection device, wherein the port corresponding to the second node identifier is configured to forward a message to the second node.

23. The apparatus according to claim 22, wherein
the communication module is further configured to send a first aging message to the interconnection device when the second node exits the data processing system, wherein the first aging message indicates the interconnection device to age the correspondence between the second node identifier and the port; and
the communication module is further configured to send a second aging message to the first node, wherein the second aging message indicates the global physical address of the second node.

24. A data processing node, wherein the data processing node is one of a plurality of nodes connected based on a high-speed interconnect link in a data processing system, and the apparatus comprises:
a communication module, configured to receive an access request sent by another node in the plurality of nodes, wherein the access request comprises a source address, a destination address, and an operation identifier, the source address indicates a node identifier and a physical address of a node that stores to-be-processed data, and the destination address indicates a node identifier and a physical address of a node that stores processed data; and
a data processing module, configured to perform an acceleration operation on the to-be-processed data based on the operation identifier to obtain the processed data, and store the processed data based on the destination address.

25. A controller, wherein the controller comprises a storage and at least one processor, the storage is configured to store a set of computer instructions, and when the processor executes the set of computer instructions, the controller performs the method according to any one of claims 11, 12, and 20.
